# EUROPEAN PATENT SPECIFICATION

(11) **EP 3 782 169 B1**
(45) Date of publication and mention of the grant of the patent: **31.05.2023**
(21) Application number: 19716457.7
(22) Date of filing: 15.04.2019
(51) Int. Cl.: H01B 1/24, C09D 5/24, C08K 3/04, C09D 5/08, C09D 7/61, C09D 7/40

(54) **METHOD FOR FORMING AN ELECTRICALLY CONDUCTIVE MULTILAYER COATING WITH ANTI-CORROSION PROPERTIES ONTO A METALLIC SUBSTRATE**
VERFAHREN ZUR HERSTELLUNG EINER ELEKTRISCH LEITFÄHIGEN MEHRSCHICHTIGEN BESCHICHTUNG MIT KORROSIONSSCHUTZEIGENSCHAFTEN AUF EINEM METALLISCHEN SUBSTRAT
PROCÉDÉ DE FORMATION D'UN REVÊTEMENT MULTICOUCHE ÉLECTROCONDUCTEUR DOTÉ DE PROPRIÉTÉS ANTI-CORROSION SUR UN SUBSTRAT MÉTALLIQUE

(30) Priority: 18.04.2018 LU 100768
(43) Date of publication of application: 24.02.2021
(73) Proprietor: Luxembourg Institute of Science and Technology (LIST), 4362 Esch-sur-Alzette (LU)
(72) Inventor: BOSCHER, Nicolas, 57390 Audun le Tiche (FR); CHEMIN, Jean-Baptiste, 54190 Villerupt (FR)
(74) Representative: Lecomte & Partners
(86) International application number: PCT/EP2019/059701
(87) International publication number: WO 2019/201871

(56) References cited:
- WO-A1-97/15934
- WO-A1-2018/077725
- WO-A2-2006/039179
- US-A- 5 922 466

## Description

### Technical field

The present invention is directed to the field of electrically conductive and corrosion-resistant composite coatings. In particular, the invention relates to a method for forming electrically conductive and corrosion-resistant composite multilayer coating using atmospheric-pressure plasma discharges.

### Background art

Fanelli F. et al., (study entitled "Aerosol-assisted atmospheric cold plasma deposition and characterization of superhydrophobic organic-inorganic nanocomposite thin films", in Langmuir, 2014, 30, 857-865) have demonstrated that oleate-capped ZnO nanoparticles can be deposited along with a polyethylene-like organic component. The roughness of the obtained surface is important with advancing and receding water contact angles higher than 160°. The roughness is controlled by the deposition time and the nanoparticles concentration in the dispersion.

However, the obtained coating does not fully cover the substrate and cannot afford corrosion protection to the substrate surface.

Boscher N. D. et al., (study entitled "Atmospheric pressure plasma polymerisation of metalloporphyrins containing mesoporous membranes for gas sensing applications" in Surf. Coat. Technol., 2013, 234, 48-52 and in European Patent numbered EP 2546636 B1) have demonstrated that an atmospheric pressure plasma route toward the formation of smart mesoporous coatings. The formation of a gas sensing porphyrin-based hybrid coating by an atmospheric pressure dielectric barrier discharge (AP-DBD) fed with nitrogen is thus reported. This is a liquid-assisted plasma-enhanced chemical vapour deposition for forming a porous colorimetric gas sensing layer.

Boscher N. D. et al., (study entitled "Luminescent lanthanide-based hybrid coatings deposited by atmospheric pressure plasma assisted chemical vapour deposition" in J. Mater. Chem., 2011, 21, 18959-18961) have demonstrated an atmospheric pressure plasma route toward the formation of smart hybrid coatings. The formation of a luminescent lanthanide-based hybrid coating by an atmospheric pressure dielectric barrier discharge (AP-DBD) fed with synthetic air is thus reported. A suspension composed of optically active lanthanide-containing coordination polymer particles, a silica matrix forming precursor (hexamethyldisiloxane) and a solvent (e.g. ethanol) is sprayed onto the surface of a substrate (aluminium or polypropylene foil) with an ultrasonic nebuliser. Then, the deposited layer is polymerized by AD-DBD treatment to form a composite coating which is adherent to the substrate and has a thickness of 500 nm. This composite coating is transparent to visible light but emit a strong green colour under UV irradiation (302 nm). Such luminescent hybrid coating is useful to label materials in which the anticounterfeiting particles cannot be directly embed due to high forming temperature employed.

The use of a solvent favours the formation of pores during exposition with the plasma.

International patent application published WO 2009/086161 A1 describes a method of forming an article comprising a network-like pattern of conductive traces formed of at least partially joined nanoparticles defining random-shaped cells transparent to light. In the described article, at least a portion of the cells are at least partially filled with a transparent filler material that can be electrically conductive and/or that can provide protection properties against moisture and oxygen. The described method comprises the steps of (a) applying a liquid emulsion comprising a continuous phase with electrically conductive nanoparticles to the surface of a substrate, (b) drying the emulsion to remove the solvent and subsequently forming a transparent electrically conductive coating and (c) applying a transparent filler material.

US 5 922 466 A discloses a corrosion protecting layer on a metal substrate which is prepared from a composition comprising a polymeric matrix, and a conductive filler component comprising electrically conductive carbon or metal particles and at least one conducting polymer.

The knowledge of the prior art allows to provide multi-layered coating that can be electrically conducting (by choosing the right particles to be coated). However, even if further particles with anti-corrosive properties can be added, the method of forming the multi-layered coating still uses a solvent that has to be removed (for example by evaporation) and thus can potentially create a defect into the surface. In general, the surfaces obtained by the known methods can be electrically conductive but they cannot afford an important level of anti-corrosive properties. Moreover, quite often, high temperatures are required in order to remove the solvent. This can be a drawback for certain type of substrate.

### Summary of invention

### Technical Problem

The invention has for technical problem to alleviate at least one of the drawbacks present in the prior art. More particularly, the invention has for technical problem to provide a fast and one-step method that forms a coating which is electrically conductive with anti-corrosion properties.

### Technical solution

The invention is directed to a method for forming an electrically conductive multi-layer coating with anti-corrosion properties and with a thickness comprised between 1 µm and 10 µm onto a metallic substrate, said method comprising the following subsequent steps of (a) providing a solvent-free suspension composed of solid electrically conductive fillers dispersed into a liquid matrix-forming material that contains a vinyl group; (b) depositing said suspension on at least a surface portion of a metallic substrate; (c) exposing an atmospheric pressure plasma to said surface portion so as to form one electrically conductive layer with anti-corrosion properties; and (d) repeating said steps (a), (b) and (c). Said method is remarkable in that said electrically conductive fillers are electrically conductive carbon-based particles.

The invention is particularly interesting in that it provides a method for forming a multi-layered coating presenting both electrically conductive and anti-corrosion properties. The use of plasma allows the rapid and simultaneous synthesis and deposition of the coating onto the metallic substrate. Indeed, with the use of plasma, the coating formation is measured in terms of seconds. As no solvent is used, there is no need to remove it and no waste is created. In addition, the coating formation is undertaken at room-temperature and atmospheric-pressure. There is no need to use relatively high temperature nor to operate under vacuum. All these conditions allow the deposition of a conductive coating, which will not corrode, even after more than 100 hours of chronoamperometry test under harsh conditions. Obtaining of homogeneous coated surface is reached, such surface being preventing of any defects.

Numerous electrically conductive fillers, including metallic or non-metallic core particles, have been investigated. Carbon-based electrically conductive fillers are of particular interest due to their physical and chemical properties. They can be indeed more robust than steel, lighter than aluminium, more conductive than copper and less prone to corrosion than most metals or metal alloys.

The careful selection of the matrix or binder materials may provide additional properties to the resulting conductive composite material. Various corrosion resistant matrices have been successfully investigated, and the liquid matrix-forming material can be advantageously selected from the group consisting of compounds comprising a vinyl group, organosilicon compounds comprising a vinyl group and acrylate monomers. A further improvement of the electrical conductivity and corrosion performances of the electrically conductive composite coatings is the use of crosslinking compounds with two or more vinyl groups in complement to the vinyl compound.

In a preferred embodiment, said electrically conductive carbon-based particles have dimensions between 0.5 µm and 100 µm, preferentially between 0.5 µm and 50 µm.

The particles with dimensions comprised between 0.5 µm and 100 µm, advantageously with dimensions comprised between 0.5 µm and 50 µm, have a size which is superior to the thickness of each layer. As the particles within one layer overtake the surface of said layer, the electrical conductivity between two adjacent layers is considerably enhanced.

In a preferred embodiment, said electrically conductive carbon-based particles with dimensions between 0.5 µm and 100 µm are one-dimensional carbon-based particles or two-dimensional carbon-based particles. The shape of large conductive fillers of carbon-based particles is an important parameter. 1D (*e.g*. fibers, nanotubes) or 2D conductive materials (e.g. flakes) have notably been reported to confer better properties to the conductive and corrosion-resistant composite coatings than 3D conductive materials.

In a preferred embodiment, said electrically conductive carbon-based particles have dimensions between 0.5 µm and 5 µm. The use of small conductive fillers, typically below 0.5 µm, unproductively multiplicate the conductive pathway disruptions, which increase the contact resistance, and the structure defects, which impair the corrosion properties of the composite films.

In a preferred embodiment, said electrically conductive fillers further comprise electrically conductive carbon-based particles with dimensions between 1 nm and 99 nm, said carbon-based particles with dimensions between 1 nm and 99 nm being preferentially three-dimensional carbon-based particles. A further improvement of the electrical conductivity and corrosion performances of the electrically conductive composite coatings is the use of smaller conductive fillers in complement to the large conductive fillers. The small fillers, filling the voids formed by the large fillers, can significantly improve the electrical conductivity of the composite coatings. Both electrical conductivity and corrosion performances of the electrically conductive composite coatings are advantageously improved by simultaneously employing for instance large 1D or 2D electrically conductive fillers and small 3D electrically conductive fillers.

In a preferred embodiment, said electrically conductive carbon-based particles with dimensions between 0.5 µm and 100 µm have a size superior to the thickness of each layer formed by steps (a), (b) and (c).

In a preferred embodiment, the thickness of a layer is comprised between 50 nm and 500 nm, preferentially between 100 nm and 250 nm, optionally the value of 100 nm being excluded from this range. Steps (a), (b), (c), that also may be named deposition cycles, are repeated so as to advantageously obtain a thickness of the multi-layer coating comprised between 1 µm and 10 µm with a thickness of a layer being of from 100 nm to 250 nm, optionally the value of 100 nm being excluded from this range. Typically, deposition cycles may be from 10 to 100.

In a preferred embodiment, said electrically conductive multi-layer coating with anti-corrosion properties has a thickness comprised between 2 µm and 5 µm. Thicknesses comprised between 2 µm and 5 µm provided the best compromise for a low through-plane resistivity and a high corrosion protection of the underlying substrate.

In a preferred embodiment, the volume fraction of electrically conductive carbon-based particles with dimensions between 0.5 µm and 100 µm in the electrically conductive coating with anti-corrosion properties is comprised between 50% and 85 %. The large conductive fillers are thus in excess in comparison to the smaller conductive fillers, for instance with dimensions between 1 nm and 99 nm, thereby improving the desired effects, as mentioned above, An increase of said volume fraction above a certain value, *i.e.* 85%, may result in the formation of powdery and non-adherent coatings and severe corrosion problems may start to appear. When the volume fraction increases, typically above 50% for electrically conductive carbon-based particles with dimensions between 0.5 µm and 100 µm, the percolation threshold is reached and thus, composite coatings, with the volume fraction above the percolation threshold, reach the plateau with a minimum specific contact resistivity of typically 10 mΩ·cm², therefore with an increased electrical conductivity.

In a preferred embodiment, the volume fraction of electrically conductive carbon-based particles with dimensions between 1 nm and 99 nm in the electrically conductive coating with anti-corrosion properties is equal or less than 25 %. An increase of the volume fraction of these electrically conductive carbon-based particles above this value, results in the formation of powdery and non-adherent coatings.

In a preferred embodiment, said electrically conductive carbon-based particles with dimensions between 0.5 µm and 100 µm and electrically conductive carbon-based particles with dimensions between 1 nm and 99 nm are based on graphene, graphite, carbon black and/or carbon nanotubes.

In a preferred embodiment, said liquid matrix-forming material that contains vinyl groups is based on a vinyl compound, preferentially an organosilicon compound bearing at least one vinyl group.

In a preferred embodiment, said vinyl compound is an organosilicon compound bearing at least one vinyl group, preferentially vinyltrimethoxysilane, and/or an acrylate compound, preferentially methyl methacrylate or glycidyl methacrylate.

In a preferred embodiment, said vinyl compound is an organosilicon compound bearing at least one vinyl group is vinyltrimethoxysilane, methyl methacrylate, glycidyl methacrylate and/or ethylene glycol dimethylacrylate.

In a preferred embodiment, said liquid matrix-forming material that contains vinyl groups is based on an organosilicon compound bearing at least one vinyl group and/or is based on an acrylate compound.

In a preferred embodiment, said liquid matrix-forming material that contains vinyl groups is vinyltrimethoxysilane, methyl methacrylate, glycidyl methacrylate and/or ethylene glycol dimethylacrylate.

In a preferred embodiment, the average diameter of said electrically conductive carbon-based particles with dimensions between 1 nm and 99 nm is comprised between 5 nm and 50 nm. One should be aware that the small conductive fillers size should be well below the large conductive fillers size to adequately fill the voids and form proper conductive pathways.

In a preferred embodiment, said atmospheric pressure plasma is composed of nitrogen gas, oxygen gas, argon gas, a matrix-forming material that contains a vinyl group, and/or an organosilicon compound, preferentially octamethylcyclotetrasiloxane, methyl methacrylate and/or glycidyl methacrylate.

In a preferred embodiment, said metallic substrate is a plate of titanium.

In a preferred embodiment, the suspension of step (a) is sonicated for one hour before step (b). The sonication step allows to efficiently disperse the particules.

In a preferred embodiment, said step (c) is performed at a temperature comprised between 5°C and 90°C, preferably between 15°C and 40°C.

In a preferred embodiment, the metallic substrate is provided on a moving stage transporting the metallic substrate through a suspension deposition zone to deposit the suspension on at least a portion of the metallic substrate and a plasma zone in which the atmospheric pressure plasma is applied.

In a preferred embodiment, the moving stage is adapted to move the metallic substrate repeatedly through the zones.

In general, the particular embodiments of each object of the invention are also applicable to other objects of the invention. To the extent possible, each object of the invention is combinable with other objects.

### Brief description of the drawings

Figure 1 shows a schematic perspective view of an apparatus for carrying out the method according to the present invention.
Figure 2 shows a plot of the electrically conductivity in function of the carbon-based conductive filler volume fraction.
Figure 3 shows top-view secondary electron microscopy (SEM) images of electrically conductive composite coatings elaborated from different conditions and employing small 3D carbon-based conductive fillers.
Figure 4 shows side-view secondary electron microscopy (SEM) images of electrically conductive composite coatings elaborated from different conditions and employing carbon-based conductive fillers.
Figure 5 shows chronoamperometry curves in order to determine the anti- corrosion properties of the obtained multilayer coating.
Figure 6 shows the optical images of the electrically conductive composite coating elaborated from different deposition conditions prior and after 8 hours of chronoamperometry test.
Figure 7 illustrates one layer obtained according to the method of the invention, with large and small electrically conductive fillers.
Figure 8 shows the formation of the multi-layered coating on the metallic substrate, in accordance with the method of the invention.
Figure 9 shows top-view secondary electron microscopy (SEM) images of an electrically conductive composite coating elaborated from small 3D and large 2D carbon-based conductive fillers.
Figure 10 shows top-view secondary electron microscopy (SEM) images of electrically conductive composite coating elaborated from large 2D carbon-based conductive fillers.
Figure 11 shows chronoamperometry curves in order to determine the anti-corrosion properties of the obtained multilayer coating.
Figure 12 shows top-view secondary electron microscopy (SEM) images of electrically conductive composite coating elaborated from large 2D carbon-based conductive fillers.

### Description of an embodiment

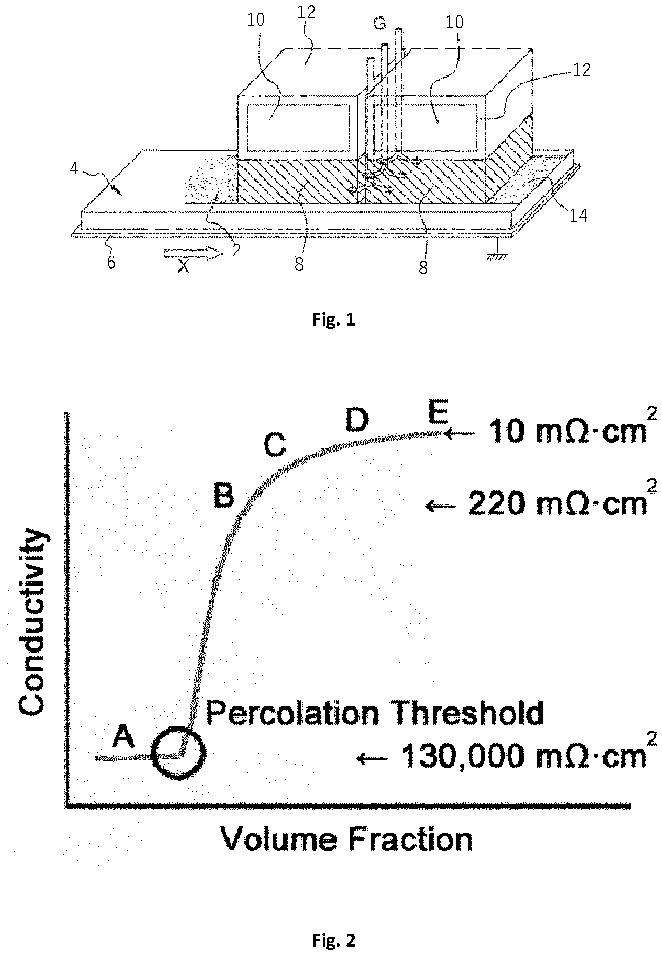

Figure 1 shows a schematic view of an exemplary system for carrying out the invention. According to figure 1, a suspension 2 consisting of solid electrically conductive fillers dispersed into a liquid matrix-forming material is deposited onto a portion of one substrate 4. No solvent whatsoever is present in the suspension 2. The liquid form of the suspension 2 is due to the matrix-forming material which is liquid by itself. A stage 6 transports the substrate 4 into the direction x such that the portion of the substrate 4 is moved through a plasma zone 8 in which the coated substrate is exposed to an atmospheric pressure dielectric barrier discharge (AP-DBD) plasma 8. Both zones do not overlap, or are spatially distinct, respectively. The dielectric barrier discharge is provided via a system of two electrodes 10 arranged side by side and having a slot between them through which a gas G may pass to be directed in the direction of the coated substrate 4. Both electrodes 10 are coated with a dielectric layer 12. Being exposed to the dielectric barrier discharge plasma, the matrix forming material forms a solid layer embedding the electrically conductive fillers on the substrate 4. Having passed the plasma zone 8, the substrate 2 comprises a layer 14 including the electrically conductive fillers. Although not depicted, the above-mentioned steps should be carried out several times in order to obtain an effective multi-layered coating. Furthermore, the method is carried out at atmospheric pressure, *i.e.* at pressures of about 10⁵ Pa and at relatively low temperature, for example between 5°C and 90°C, preferably between 15°C and 40°C.

In particular, it is possible that the moving stage 6 is arranged as a conveyor belt so that the metallic substrate 2 can in principle pass endlessly through the zones of the system.

Alternatively, the mentioned zones could be adapted to repeatedly pass over the substrate. A further variant consists in repeating sequences of depositing the suspension and/or applying the plasma to a production line.

Numerous electrically conductive fillers, including metallic or non-metallic core particles, have been investigated. Carbon-based electrically conductive fillers are of particular interest due to their physical and chemical properties. They can be indeed more robust than steel, lighter than aluminium, more conductive than copper and less prone to corrosion than most metals or metal alloys. Among the carbon-based electrically conductive fillers, the following can be used: carbon black, carbon fibres, synthetic or natural graphite, graphene, carbon nanotube including multi-walled carbon nanotubes (MWCNTs).

Examples of commercially-available carbon-based conductive fillers are: Timrex^{®} SFG6, C-NERGY^{™} Super C65, Ketjenblack EC300J, Vulcan XC72R, Ketjenblack EC330JMA, Ketjenblack EC600JC, C-NERGY^{™} Super C45, Conductex 975 Ultra, Shewinigan Black, Timrex^{®} KS6, SUPER P Li, C-NERGY^{™} SFG6L, C-NERGY^{™} KS6L, Raven^{®}, Raven^{®} 1220 Ultra^{®}, Raven^{®} 1250, Raven^{®} 410, Pearls 2000, Pearls 3610, Micro 850, Micro 230U, Micro 5601, FC3243.

Plethora of matrix or binder materials has been investigated for the formation of electrically conductive composite coatings. The careful selection of the matrix or binder materials may provide additional properties to the resulting conductive composite material. Various corrosion resistant matrices have been successfully investigated.

For instance, the liquid matrix-forming material can be selected from the following list of vinyl compounds: ethene, propene, butadiene, styrene, chloroethene, vinyl acetate, vinyl fluoride, acrylonitrile, tetrafluoroethylene, and/or any other chemical compounds comprising a vinyl group or an ethenyl group can be employed as the liquid matrix-forming material.

Vinyltrimethoxysilane (VTMOS), divinyldimethoxysilane, trivinylmethoxysilane, tetravinylsilane, vinyltriethoxysilane, divinyldiethoxysilane, trivinylethoxysilane, divinyltetramethoxydisiloxane, tetravinyldimethoxydisiloxane, hexavinyldisiloxane, divinyltetraethoxydisiloxane, tetravinyldiethoxydisiloxane and/or any other organosilicon compounds comprising a vinyl group can also be used.

More particularly, the liquid matrix-forming material can be selected from the following list of acrylate monomers: methyl methacrylate, methyl acrylate, ethyl methacrylate, ethyl acrylate, glycidyl methacrylate, ethylene glycol diacrylate, ethylene glycol dimethylacrylate and/or any other chemical compounds comprising an acrylate group can be employed as the liquid matrix-forming material. To this effect, it is noted that acrylate monomers are in fact molecules bearing a vinyl group directly attached to a carbonyl carbon.

Substrates can be metallic substrates, for instance a plate of titanium, substrates in paper, in wood, in glass, in polymer, in cellulose, *etc.*

### Example 1

### VTMOS and Carbon Black (3D, dimensions 1 nm - 99 nm)

A suspension composed of solid carbon black nanoparticles, e.g. Ketjenblack EC600JC, dispersed in a liquid matrix-forming material that contains vinyl groups, e.g. vinyltrimethoxysilane (VTMOS), is deposited as a thin liquid layer, ca. hundreds of nanometres, onto a metallic substrate, for instance, a plate of titanium. Subsequently, the coated substrate, placed on the grounded electrode of an atmospheric-pressure dielectric barrier discharge (AP-DBD) setup, is exposed to an AP-DBD ignited by a 10,000 Hz sinusoidal electrical excitation of 8,000 V. The plasma discharge gas is composed of nitrogen, oxygen and vapours of an organosilicon compound, e.g. octamethylcyclotetrasiloxane (OMCTS). The suspension deposition step and the plasma curing step, (i.e. the deposition cycle), may be repeated multiple times to achieve electrically conductive composite coatings with the desired thickness. In the present example, fifty deposition cycles are performed. As a result of exposure to the AP-DBD, a solid and adherent electrically conductive composite coating is formed on top of the metallic substrate.

The carbon black nanoparticles concentration into the liquid matrix precursor, *i.e.* VTMOS, is varied between 0.5 to 10 g·L⁻¹, allowing to investigate various carbon-based electrically conductive fillers volume fraction, *i.e.* 10 to 40%, in the resulting composite coating. Two different conductive fillers, with average diameter size below 50 nm and 25 nm, were also investigated. The resulting composite coatings are shown to follow the percolation theory. This theory consists in a sharp increase of the conductivity, from several orders of magnitude, when the volume fraction of conductive fillers exceeds a critical value, *i.e.* the percolation threshold (see figure 2). Following to this rapid increase of the conductivity, no significant changes in the electrical properties of the composite coatings are observed anymore.

It is to be noted that the volume fraction of the electrically conductive carbon-based particles is determined by energy-dispersive X-ray spectroscopy (EDX), since the liquid matrix-forming material is volatile and the concentration of the suspension can be different from the formed electrically conductive multi-layer coating.

Sample A, which is a sample with a low volume fraction, typically below 40% for electrically conductive carbon-based particles with dimensions between 0.5 µm and 100 µm, has a specific contact resistivity of 130,000 mΩ·cm². In other words, sample A is poorly electrically conductive.

When the volume fraction increases, typically above 50% for electrically conductive carbon-based particles with dimensions between 0.5 µm and 100 µm, the percolation threshold is reached and thus, samples B to E reaches the plateau with a minimum specific contact resistivity of 10 mΩ·cm², therefore with an increased electrical conductivity, as shown in Figure 2

However, an increase of the carbon black nanoparticles volume fraction above a certain value, *i.e.* 25 %, results in the formation of powdery and non-adherent coatings. Corrosion problems start to appear above the plateau shown in figure 2.

That is the reason why the ratio of electrically conductive particles with dimensions between 1 nm and 99 nm in the coating is equal or less than 25%.

Additional investigations have demonstrated that this maximum volume fraction is higher for composite coatings elaborated from the bigger carbon-based conductive fillers, e.g. Ketjenblack EC330JMA. In accordance with previous research works, the percolation threshold is reached with a lower fraction of carbon-based conductive fillers for the composite coatings elaborated from the highest specific surface area carbon-based conductive fillers.

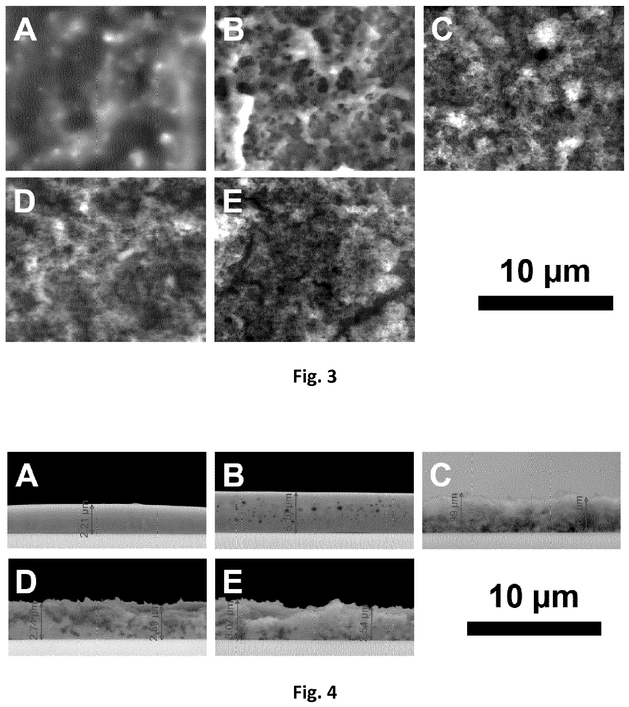

Scanning electron microscopy (SEM) (see figure 3) shows that the electrically conductive composite coatings cover the whole surface of the metallic substrate. The electrically conductive composite coatings with the lowest carbon-based conductive fillers volume fraction, *i.e.* condition A, exhibit a dense morphology with carbon-based conductive fillers present at all over their surface.

Composite coatings prepared from a volume fraction above the conductivity percolation threshold (conditions B to E) show a large number of spherical carbon-based conductive fillers, seemingly laced together to form necklaces. The observed necklaces appear thinner as the volume fraction of carbon-based conductive fillers increase.

The thickness of the electrically conductive composite coatings grown from fifty deposition cycles, determined from Scanning Electron Microscopy (SEM) side-view observations (see figure 4), is shown to fluctuate from 1 to 10 µm, or more often from 2 to 5 µm, irrespective of the deposition conditions. This allows the use of such multilayer coating in order to make bipolar plates for fuel cell application. Interesting electrical properties can be demonstrated when such a low thickness is provided to a substrate.

Indeed, the low thickness of the multi-layer coating, *i.e.* comprised between 1 µm and 10 µm, allows for a material which is functionalized with such electrically conductive multi-layer coating with anti-corrosion properties to display a high electrically conductance G. This provides an increase of the electrical intensity I during electrical connection.

Chronoamperometry tests have been provided to determine the anti-corrosion properties of the multi-layered coating obtained according to the method of the invention.

The corrosion tests are carried out in a conventional corrosion cell (V = 300 mL) coupled to a GAMRY 600 potentiostat. The corrosion test conditions are chosen to simulate a fuel cell operation conditions. The electrolyte composition is as following: pH = 3 (H₂SO₄); Cl⁻ 10 ppm (NaCl) and F⁻ 30 ppm (NaF). The chronoamperometry parameters are the following: the voltage is set up to 0.9 V vs SHE; the electrolyte temperature 80°C and the duration of the tests is 100 hours. These conditions are actually quite harsh conditions in order to obtain a relevant idea of the anti-corrosion properties of the coated substrates.

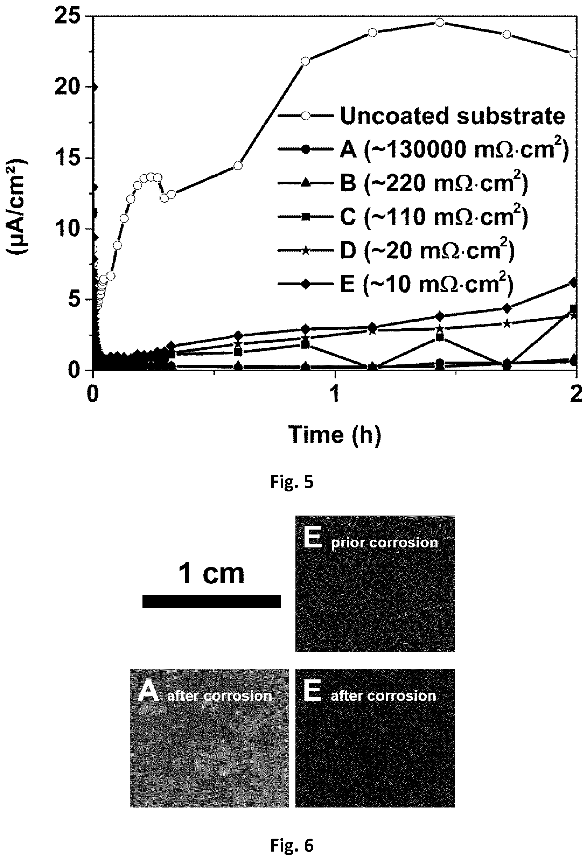

Figure 5 shows that all the electrically conductive composite coatings ensure a reduction of the corrosion current.

The corrosion performances are shown to be inversely related with the volume fraction of conductive fillers. This result is consistent with the observations made by SEM as denser layers are expected to provide a far better protection. Samples A and B did allow to maintain the corrosion current to 0.25 µA·cm² for several hours. However, delamination occurred on several places and led to a rapid increase of the corrosion current after three hours under the test conditions.

Interestingly, condition B, which is already above the percolation threshold, provides a significant corrosion protection to the metallic substrate.

This highlights the suitability of the proposed approach for the deposition of electrically conductive composite coatings for the preparation of fuel cell bipolar plates.

For conditions C to E, the numerous voids within the electrically conductive composite coatings induce lower corrosion properties of the films. Nevertheless, contact resistance measurements performed after the eight hours chronoamperometry test show an unaltered or barely altered contact resistance (*i.e.* tens of mΩ·cm²).

Therefore, these deposition conditions are also very interesting in the preparation of bipolar plates for fuel cell application.

Additionally, optical and SEM observations of the electrically conductive composite coatings after the corrosion test did not reveal any change of the morphology of the film in relation with sample E (see figure 6). These results indicate the excellent behavior of the electrically conductive composite coatings when exposed to the fuel cell operating conditions.

### Example 2

### VTMOS and Carbon Black (3D, dimensions 1 nm - 99 nm) and natural graphite (2D, dimensions 0.5 µm - 100 µm)

Several literature works have reported an increase of the in-plane and through-plane conductivities with increasing size of the electrically conductive fillers (typically in the micrometer to tens of micrometers range). Indeed, the use of small conductive fillers is assumed to unproductively multiplicate the conductive pathway disruptions, increasing the contact resistance, and the structure defects, which gut the corrosion properties of the electrically conductive composite coatings. In addition, the shape of large conductive fillers is an important parameter. 1D (e.g. fibers, nanotubes) or 2D conductive materials (e.g. flakes) have notably been reported to confer better properties to the conductive and corrosion-resistant composite coatings than 3D conductive materials. Graphite flakes (2D) and carbon fibers (1D) effectively stacked to form effective conductive pathways. On the other hand, large 3D conductive fillers form large voids, which are detrimental to both the contact resistance and corrosion resistance.

A further improvement of the electrical conductivity and corrosion performances of the electrically conductive composite coatings is the use of smaller conductive fillers in complement to the large conductive fillers. The small fillers, filling the voids formed by the large fillers, can significantly improve the electrical conductivity of the composite coatings. One should be aware that the small conductive fillers size should be well below the large conductive fillers size to adequately fill the voids and form proper conductive pathways.

In general, it has been experimented that the large conductive fillers are particles with dimensions comprised between 0.5 µm and 100 µm while the smaller conductive fillers are particles with dimensions comprised between 1 nm and 99 nm.

The particles may be of one-dimensional shape, two-dimensional shape and/or three-dimensional shape, the particles with dimensions comprised between 1 nm and 99 nm being preferentially three-dimensional particles.

The particles with dimensions comprised between 0.5 µm and 100 µm, advantageously with dimensions comprised between 0.5 µm and 50 µm, have a size which is superior to the thickness of each layer which is comprised between 50 nm and 500 nm, preferentially between 100 nm and 250 nm. As the particles within one layer overtake the surface of said layer, the electrical conductivity between two adjacent layers is considerably enhanced.

It is to be noted that the dimensions of the carbon-based particles have been determined by Scanning Electron Microscopy (SEM) and are in fact the expression of D50 (medium value of the particle size distribution).

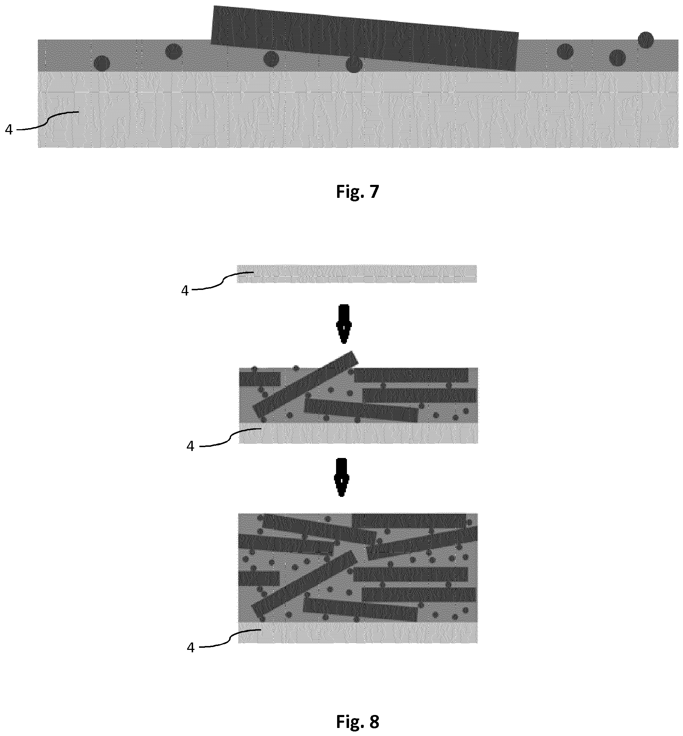

Both electrical conductivity and corrosion performances of the electrically conductive composite coatings are improved by simultaneously employing large 1D or 2D electrically conductive fillers and small 3D electrically conductive fillers. Figure 7 shows such how such coating can be illustrated, while figure 8 shows the formation of the multi-layered coating on a substrate 4.

On one hand, the large electrically conductive fillers, made of natural graphite flakes with a 2D shape and a size in the micrometer range (for instance, Micro850 from Asbury Carbons), have been selected as the major electrically conductive filler with loading content from 50 to 85 %. Preferably, the large conductive fillers are thus in excess in comparison to the smaller conductive fillers.

On the other hand, the smaller electrically conductive fillers, with a 3D shape and a 6 nm size (for instance, Ketjenblack EC600JC), have been selected as minor conductive filler with loading content from 0 to 25 %.

The two types of electrically conductive fillers have been dispersed in the matrix precursor, *e.g.* a liquid matrix-forming material that contains vinyl groups, *e.g.* vinyltrimethoxysilane (VTMOS), and sonicated for one hour.

A thin layer of the polydisperse suspension is subsequently applied on the surface of the metallic substrate to be coated and briefly exposed to an atmospheric-pressure plasma discharge. The thickness of the deposited liquid and polydisperse suspension layer is in the range of several tens to several hundreds of nanometers, which is lower than the longest dimension of the major filler.

A total of ten deposition cycles is performed in order to mitigate the defects of each deposition cycle. As a result to this sequence, a plurality of stacked electrically conductive composite layers constituting an electrically conductive composite coatings coating are formed.

The resulting electrically conductive composite coating exhibits both a high electrical conductivity and corrosion-protection properties.

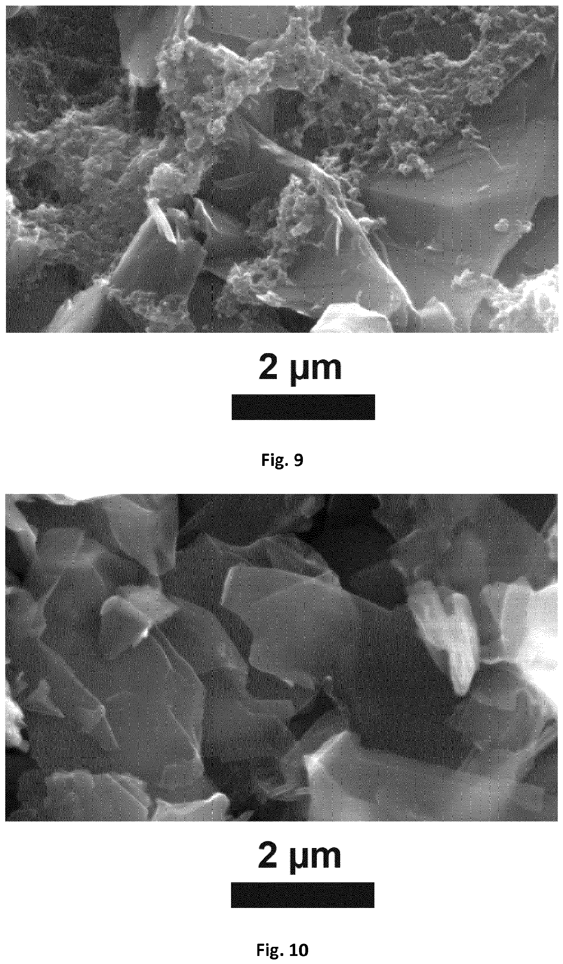

SEM analysis of the composite coatings elaborated from both large 2D and small 3D conductive fillers highlights the bimodal composition of these films (see figure 9). The small 3D conductive fillers are shown to uniformly mixe with the large 2D conductive fillers. Such as predicted from the literature, the small 3D conductive fillers seem to form bridges between the large 2D graphite plates (see figure 9).

### Example 3

### MMA and natural graphite (2D, dimensions 0.5 µm - 100 µm)

The following preferred embodiment describes another experimental setup for carrying out the method according to the invention.

A suspension composed of solid two-dimensional natural graphite flakes, e.g. Asbury Micro 850, dispersed in a liquid matrix-forming material that contains vinyl groups, e.g. methyl methacrylate (MMA), is deposited as a thin liquid layer, ca. hundreds of nanometres, onto a metallic substrate, for instance, a plate of titanium. Subsequently, the coated substrate, placed on the grounded electrode of an atmospheric-pressure dielectric barrier discharge (AP-DBD) setup, is exposed to an AP-DBD ignited by a 10,000 Hz sinusoidal electrical excitation of 8,000 V. The plasma discharge gas is composed of argon and vapours of a vinyl compound, e.g. methyl methacrylate (MMA). The suspension deposition step and the plasma curing step, (i.e. the deposition cycle), may be repeated multiple times to achieve electrically conductive composite coatings with the desired thickness. In the present example, one hundred deposition cycles are performed. As a result of exposure to the AP-DBD, a solid and adherent electrically conductive composite coating is formed on top of the metallic substrate.

The natural graphite flakes concentration into the liquid matrix precursor, *i.e.* MMA, is varied between 1 to 40 g·L⁻¹, allowing to investigate various carbon-based electrically conductive fillers volume fraction, *i.e.* 10 to 90 %, in the resulting composite coating. The resulting composite coatings are shown to follow the percolation theory. This theory consists in a sharp increase of the conductivity, from several orders of magnitude, when the volume fraction of conductive fillers exceeds a critical value, *i.e.* the percolation threshold. Following to this rapid increase of the conductivity, no significant changes in the electrical properties of the composite coatings are observed anymore.

It is to be noted that the volume fraction of the electrically conductive carbon-based particles is determined by energy-dispersive X-ray spectroscopy (EDX), since the liquid matrix-forming material is volatile and the concentration of the suspension can be different from the formed electrically conductive multi-layer coating.

An increase of the natural graphite flakes volume fraction above a certain value, *i.e.* 85 %, results in the formation of powdery and non-adherent coatings and severe corrosion problems start to appear

That is the reason why the ratio of natural graphite flakes in the coating is equal or less than 85 %.

Scanning electron microscopy (SEM) observations displayed the presence of the graphite flakes with a size from 1 to 4 µm (see figure 10). Most of the graphite flakes exhibited an orientation almost parallel to the substrate (see figure 10).

### Example 4

### MMA and natural graphite (2D, dimensions 0.5 µm - 100 µm) and EGDMA

Several literature works have reported an increase of the corrosion resistance when employing crosslinking agents.

A further improvement of the electrical conductivity and corrosion performances of the electrically conductive composite coatings is the use of crosslinking compounds with two or more vinyl groups in complement to the vinyl compound.

A suspension composed of solid two-dimensional natural graphite flakes, e.g. Asbury Micro 850, dispersed in a liquid matrix-forming material that contains vinyl groups, e.g. methyl methacrylate (MMA), which combined a crosslinking compound, e.g. ethylene glycol dimethylacrylate (EGDMA), is deposited as a thin liquid layer, ca. hundreds of nanometres, onto a metallic substrate, for instance, a plate of titanium. Subsequently, the coated substrate, placed on the grounded electrode of an atmospheric-pressure dielectric barrier discharge (AP-DBD) setup, is exposed to an AP-DBD ignited by a 10,000 Hz sinusoidal electrical excitation of 8,000 V. The plasma discharge gas is composed of argon and vapours of a vinyl compound, e.g. ethylene glycol dimethylacrylate (EGDMA). The suspension deposition step and the plasma curing step, (i.e. the deposition cycle), may be repeated multiple times to achieve electrically conductive composite coatings with the desired thickness. In the present example, one hundred deposition cycles are performed. As a result of exposure to the AP-DBD, a solid and adherent electrically conductive composite coating is formed on top of the metallic substrate.

Chronoamperometry tests have been provided to determine the anti-corrosion properties of the multi-layered coating obtained according to the method of the invention.

The corrosion tests are carried out in a conventional corrosion cell (V = 300 mL) coupled to a GAMRY 600 potentiostat. The corrosion test conditions are chosen to simulate a fuel cell operation conditions. The electrolyte composition is as following: pH = 3 (H₂SO₄); Cl⁻ 10 ppm (NaCl) and F⁻ 30 ppm (NaF). The chronoamperometry parameters are the following: the voltage is set up to 0.9 V vs SHE; the electrolyte temperature 80°C and the duration of the tests is 100 hours. These conditions are actually quite harsh conditions in order to obtain a relevant idea of the anti-corrosion properties of the coated substrates.

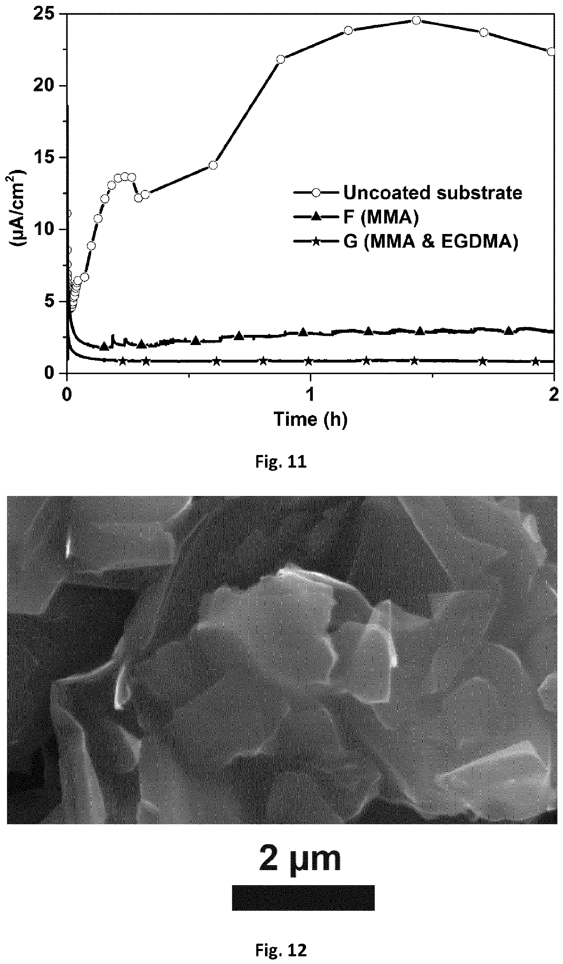

Figure 11 shows that all the electrically conductive composite coatings ensure a reduction of the corrosion current.

Interestingly, upon addition of the crosslinking compound, the electrical conductivity remains unchanged while the corrosion protection to the metallic substrate is significantly improved.

This highlights the suitability of the proposed approach for the deposition of electrically conductive composite coatings for the preparation of fuel cell bipolar plates.

Therefore, these deposition conditions are also very interesting in the preparation of bipolar plates for fuel cell application.

### Example 5

### GMA and natural graphite (2D, dimensions 0.5 µm - 100 µm)

The following preferred embodiment describes another experimental setup for carrying out the method according to the invention.

A suspension composed of solid two-dimensional natural graphite flakes, e.g. Asbury 3442, dispersed in a liquid matrix-forming material that contains vinyl groups, e.g. glycidyl methacrylate (GMA), is deposited as a thin liquid layer, ca. hundreds of nanometres, onto a metallic substrate, for instance, a plate of titanium. Subsequently, the coated substrate, placed on the grounded electrode of an atmospheric-pressure dielectric barrier discharge (AP-DBD) setup, is exposed to an AP-DBD ignited by a 10,000 Hz sinusoidal electrical excitation of 8,000 V. The plasma discharge gas is composed of argon and vapours of a vinyl compound, e.g. glycidyl methacrylate (GMA). The suspension deposition step and the plasma curing step, (i.e. the deposition cycle), may be repeated multiple times to achieve electrically conductive composite coatings with the desired thickness. In the present example, forty deposition cycles are performed. As a result of exposure to the AP-DBD, a solid and adherent electrically conductive composite coating is formed on top of the metallic substrate.

The natural graphite flakes concentration into the liquid matrix precursor, *i.e.* GMA, is varied between 50 to 100 g·L⁻¹, allowing to investigate various carbon-based electrically conductive fillers volume fraction, *i.e.* 50 to 90 %, in the resulting composite coating. The resulting composite coatings are shown to follow the percolation theory. This theory consists in a sharp increase of the conductivity, from several orders of magnitude, when the volume fraction of conductive fillers exceeds a critical value, *i.e.* the percolation threshold. Following to this rapid increase of the conductivity, no significant changes in the electrical properties of the composite coatings are observed anymore.

It is to be noted that once again the volume fraction of the electrically conductive carbon-based particles is determined by energy-dispersive X-ray spectroscopy (EDX), since the liquid matrix-forming material is volatile and the concentration of the suspension can be different from the formed electrically conductive multi-layer coating.

An increase of the natural graphite flakes volume fraction above a certain value, *i.e.* 85 %, results in the formation of powdery and non-adherent coatings and severe corrosion problems start to appear.

That is the reason why the ratio of natural graphite flakes in the coating is equal or less than 85 %.

Scanning electron microscopy (SEM) observations displayed the presence of the graphite flakes with a size from 2 to 5 µm (see figure 12). Most of the graphite flakes exhibited an orientation almost parallel to the substrate (see figure 12).

Chronoamperometry tests have been provided to determine the anti-corrosion properties of the multi-layered coating obtained according to the method of the invention.

Chronoamperometry tests demonstrated that all the electrically conductive composite coatings ensure a reduction of the corrosion current.

The resulting electrically conductive composite coating exhibits both a high electrical conductivity and corrosion-protection properties.

This highlights the suitability of the proposed approach for the deposition of electrically conductive composite coatings for the preparation of fuel cell bipolar plates.

Therefore, these deposition conditions are also very interesting in the preparation of bipolar plates for fuel cell application.

It is worth to note that the multi-layer coatings obtained according to the present invention can be coated on other substrate than the metallic substrate on which the exemplary embodiment has been described. For instance, substrate such as paper, wood, cellulose, polymer or glass could be used.

## Claims

1. Method for forming an electrically conductive multi-layer coating with anti-corrosion properties and with a thickness comprised between 1 µm and 10 µm onto a metallic substrate (4), said method comprising the following subsequent steps:
a) providing a solvent-free suspension composed of solid electrically conductive fillers dispersed into a liquid matrix-forming material that contains a vinyl group;
b) depositing said suspension on at least a surface portion of a metallic substrate;
c) exposing an atmospheric pressure plasma to said surface portion so as to form one electrically conductive layer with anti-corrosion properties; and
d) repeating said steps (a), (b) and (c);
**characterized in that**
said electrically conductive fillers are electrically conductive carbon-based particles, and **in that**
the thickness of a layer is comprised between 100 nm and 250 nm.

2. Method according to claim 1, **characterized in that** said electrically conductive carbon-based particles have dimensions between 0.5 µm and 100 µm, preferentially between 0.5 µm and 50 µm, or preferentially between 0.5 µm and 5 µm.

3. Method according to claim 2, **characterized in that** said electrically conductive carbon-based particles with dimensions between 0.5 µm and 100 µm are one-dimensional carbon-based particles or two-dimensional carbon-based particles.

4. Method according to any one of claims 1-3, **characterized in that** said electrically conductive fillers further comprise electrically conductive carbon-based particles with dimensions between 1 nm and 99 nm, said carbon-based particles with dimensions between 1 nm and 99 nm being preferentially three-dimensional carbon-based particles.

5. Method according to any one of claims 2-4, **characterized in that** said electrically conductive carbon-based particles with dimensions between 0.5 µm and 100 µm have a size superior to the thickness of each layer formed by steps (a), (b) and (c).

6. Method according to any one of claims 1-5, **characterized in that** said electrically conductive multi-layer coating with anti-corrosion properties has a thickness comprised between 2 µm and 5 µm.

7. Method according to any one of claims 2-6, **characterized in that** the volume fraction of electrically conductive carbon-based particles with dimensions between 0.5 µm and 100 µm in the electrically conductive coating with anti-corrosion properties is comprised between 50% and 85%.

8. Method according to any one of claims 5-7, **characterized in that** the volume fraction of electrically conductive carbon-based particles with dimensions between 1 nm and 99 nm in the electrically conductive coating with anti-corrosion properties is equal or less than 25%.

9. Method according to any one of claims 2-8, **characterized in that** said electrically conductive carbon-based particles with dimensions between 0.5 µm and 100 µm and electrically conductive carbon-based particles with dimensions between 1 nm and 99 nm are based on graphene, graphite, carbon black and/or carbon nanotubes.

10. Method according to any one of claims 1-9, **characterized in that** said liquid matrix-forming material that contains vinyl groups is based on an organosilicon compound bearing at least one vinyl group and/or is based on an acrylate compound.

11. Method according to any one of claims 1-10, **characterized in that** said liquid matrix-forming material that contains vinyl groups is vinyltrimethoxysilane, methyl methacrylate, glycidyl methacrylate and/or ethylene glycol dimethylacrylate.

12. Method according to any one of claims 5-11, **characterized in that** the average diameter of said electrically conductive carbon-based particles with dimensions between 1 nm and 99 nm is comprised between 5 nm and 50 nm.

13. Method according to any one of claims 1-12, **characterized in that** said atmospheric pressure plasma is composed of nitrogen gas, oxygen gas, argon gas, a matrix-forming material that contains a vinyl group, and/or an organosilicon compound, preferentially octamethylcyclotetrasiloxane, methyl methacrylate and/or glycidyl methacrylate.

14. Method according to any one of claims 1-13, wherein said step (c) is performed at a temperature comprised between 5°C and 90°C, preferably between 15°C and 40°C.

15. Method according to any one of claims 1-14, **characterized in that** the metallic substrate is provided on a moving stage transporting the metallic substrate through a suspension deposition zone to deposit the suspension on at least a portion of the metallic substrate and a plasma zone in which the atmospheric pressure plasma is applied.

## Patentansprüche

1. Verfahren zur Bildung einer elektrisch leitfähigen Mehrschichtbeschichtung mit Korrosionsschutzeigenschaften und mit einer Dicke zwischen 1 µm und 10 µm auf einem metallischen Träger (4), wobei das Verfahren die folgenden aufeinanderfolgenden Schritte umfasst:
a) Bereitstellen einer lösungsmittelfreien Suspension, die aus festen, elektrisch leitfähigen Füllstoffen besteht, die in einem flüssigen, matrixbildenden Material verteilt sind, das eine Vinylgruppe enthält;
b) Abscheiden der Suspension auf mindestens einem Oberflächenabschnitt eines metallischen Trägers;
c) Aussetzen eines Atmosphärendruck-Plasmas auf dem Oberflächenabschnitt, um eine elektrisch leitfähige Schicht mit Korrosionsschutzeigenschaften zu bilden; und
d) Wiederholen der Schritte (a), (b) und (c);
**dadurch gekennzeichnet, dass** die elektrisch leitfähigen Füllstoffe elektrisch leitfähige Teilchen auf Kohlenstoffbasis sind und dass die Dicke einer Schicht zwischen 100 nm und 250 nm liegt.

2. Verfahren nach Anspruch 1, **dadurch gekennzeichnet, dass** die elektrisch leitfähigen Partikel auf Kohlenstoffbasis eine Größe zwischen 05 µm und 100 µm, vorzugsweise zwischen 0,5 µm und 50 µm, oder vorzugsweise zwischen 0,5 µm und 5 µm haben.

3. Verfahren nach Anspruch 2, **dadurch gekennzeichnet, dass** die elektrisch leitfähigen Partikel auf Kohlenstoffbasis mit Abmessungen zwischen 0,5 µm und 100 µm eindimensionale Partikel auf Kohlenstoffbasis oder zweidimensionale Partikel auf Kohlenstoffbasis sind.

4. Verfahren nach einem der Ansprüche 1 bis 3, **dadurch gekennzeichnet, dass** die elektrisch leitfähigen Füllstoffe ferner elektrisch leitfähige Teilchen auf Kohlenstoffbasis mit Abmessungen zwischen 1 nm und 99 nm umfassen, wobei die Teilchen auf Kohlenstoffbasis mit Abmessungen zwischen 1 nm und 99 nm vorzugsweise dreidimensionale Teilchen auf Kohlenstoffbasis sind.

5. Verfahren nach einem der Ansprüche 2-4, **dadurch gekennzeichnet, dass** die elektrisch leitfähigen Teilchen auf Kohlenstoffbasis mit Abmessungen zwischen 0,5 µm und 100 µm größer sind als die Dicke jeder in den Schritten (a), (b) und (c) gebildeten Schicht.

6. Verfahren nach einem der Ansprüche 1-5, **dadurch gekennzeichnet, dass** die elektrisch leitfähige mehrschichtige Beschichtung mit Korrosionsschutzeigenschaften eine Dicke zwischen 2 µm und 5 µm aufweist.

7. Verfahren nach einem der Ansprüche 2 bis 6, **dadurch gekennzeichnet, dass** der Volumenanteil an elektrisch leitfähigen Teilchen auf Kohlenstoffbasis mit Abmessungen zwischen 0,5 µm und 100 µm in der elektrisch leitfähigen Beschichtung mit Korrosionsschutzeigenschaften zwischen 50% und 85% liegt.

8. Verfahren nach einem der Ansprüche 5-7, **dadurch gekennzeichnet, dass** der Volumenanteil an elektrisch leitfähigen Teilchen auf Kohlenstoffbasis mit Abmessungen zwischen 1 nm und 99 nm in der elektrisch leitfähigen Beschichtung mit Korrosionsschutzeigenschaften gleich oder kleiner als 25% ist.

9. Verfahren nach einem der Ansprüche 2-8, **dadurch gekennzeichnet, dass** die elektrisch leitfähigen Teilchen auf Kohlenstoffbasis mit Abmessungen zwischen 0,5 µm und 100 µm und die elektrisch leitfähigen Teilchen auf Kohlenstoffbasis mit Abmessungen zwischen 1 nm und 99 nm auf Graphen, Graphit, Ruß und/oder Kohlenstoff-Nanoröhren aufgebaut sind.

10. Verfahren nach einem der Ansprüche 1-9, **dadurch gekennzeichnet, dass** das flüssige, Vinylgruppen enthaltende, matrixbildende Material auf einer Organosiliciumverbindung basiert, die mindestens eine Vinylgruppe trägt, und/oder auf einer Acrylatverbindung basiert.

11. Verfahren nach einem der Ansprüche 1-10, **dadurch gekennzeichnet, dass** das flüssige matrixbildende Material, das Vinylgruppen enthält, Vinyltrimethoxysilan, Methylmethacrylat, Glycidylmethacrylat und/oder Ethylenglycoldimethylacrylat ist.

12. Verfahren nach einem der Ansprüche 5-11, **dadurch gekennzeichnet, dass** der durchschnittliche Durchmesser der elektrisch leitfähigen Teilchen auf Kohlenstoffbasis mit Abmessungen zwischen 1 nm und 99 nm zwischen 5 nm und 50 nm liegt.

13. Verfahren nach einem der Ansprüche 1-12, **dadurch gekennzeichnet, dass** das Atmosphärendruck-Plasma aus Stickstoffgas, Sauerstoffgas, Argongas, einem matrixbildenden Material, das eine Vinylgruppe enthält, und/oder einer Organosiliziumverbindung, vorzugsweise Octamethylcyclotetrasiloxan, Methylmethacrylat und/oder Glycidylmethacrylat, besteht.

14. Verfahren nach einem der Ansprüche 1-13, wobei der Schritt (c) bei einer Temperatur zwischen 5°C und 90°C, vorzugsweise zwischen 15°C und 40°C, durchgeführt wird.

15. Verfahren nach einem der Ansprüche 1-14, **dadurch gekennzeichnet, dass** der metallische Träger auf einer beweglichen Bühne bereitgestellt wird, die den metallischen Träger durch eine Zone zur Abscheidung der Suspension auf mindestens einem Teil des metallischen Trägers und eine Plasmazone, in der das Atmosphärendruck-Plasma angewendet wird, führt.

## Revendications

1. Procédé de formation d'un revêtement multicouche électro-conducteur ayant des propriétés anticorrosion et une épaisseur comprise entre 1 µm et 10 µm sur un substrat métallique (4), ledit procédé comprenant les étapes suivantes consistant à :
a) fournir une suspension sans solvant composée de charges électro-conductrices solides dispersées dans un matériau liquide formant une matrice qui contient un groupe vinyle ;
b) déposer ladite suspension sur au moins une partie de la surface d'un substrat métallique ;
c) exposer ladite partie de la surface à un plasma à pression atmosphérique de manière à former une couche électro-conductrice ayant des propriétés anticorrosion ; et
d) répéter les étapes a), b) et c) ;
**caractérisé en ce que**
lesdites charges électro-conductrices sont des particules électro-conductrices à base de carbone, et **en ce que**
l'épaisseur d'une couche est comprise entre 100 nm et 250 nm.

2. Procédé selon la revendication 1, **caractérisé en ce que** lesdites particules électro-conductrices à base de carbone ont des dimensions comprises entre 0,5 µm et 100 µm, préférentiellement entre 0,5 µm et 50 µm, ou préférentiellement entre 0,5 µm et 5 µm.

3. Procédé selon la revendication 2, **caractérisé en ce que** lesdites particules électro-conductrices à base de carbone ayant des dimensions comprises entre 0,5 µm et 100 µm sont des particules à base de carbone unidimensionnelles ou des particules à base de carbone bidimensionnelles.

4. Procédé selon l'une quelconque des revendications 1 à 3, **caractérisé en ce que** lesdites charges électro-conductrices comprennent en outre des particules électro-conductrices à base de carbone ayant des dimensions comprises entre 1 nm et 99 nm, lesdites particules à base de carbone dont les dimensions sont comprises entre 1 nm et 99 nm étant de préférence des particules tridimensionnelles à base de carbone.

5. Procédé selon l'une quelconque des revendications 2 à 4, **caractérisé en ce que** lesdites particules électro-conductrices à base de carbone ayant des dimensions comprises entre 0,5 µm et 100 µm ont une taille supérieure à l'épaisseur de chaque couche formée dans les étapes (a), (b) et (c).

6. Procédé selon l'une quelconque des revendications 1 à 5, **caractérisé en ce que** ledit revêtement multicouche électro-conducteur ayant des propriétés anticorrosion a une épaisseur comprise entre 2 µm et 5 µm.

7. Procédé selon l'une quelconque des revendications 2 à 6, **caractérisé en ce que** la fraction volumique des particules électro-conductrices à base de carbone dont les dimensions sont comprises entre 0,5 µm et 100 µm dans le revêtement électro-conducteur ayant des propriétés anticorrosion est comprise entre 50% et 85%.

8. Procédé selon l'une quelconque des revendications 5 à 7, **caractérisé en ce que** la fraction volumique des particules électro-conductrices à base de carbone dont les dimensions sont comprises entre 1 nm et 99 nm dans le revêtement électro-conducteur ayant des propriétés anticorrosion est égale ou inférieure à 25%.

9. Procédé selon l'une quelconque des revendications 2 à 8, **caractérisé en ce que** lesdites particules électro-conductrices à base de carbone ayant des dimensions comprises entre 0,5 µm et 100 µm et les particules électro-conductrices à base de carbone ayant des dimensions comprises entre 1 nm et 99 nm sont à base de graphène, de graphite, de noir de carbone et/ou de nanotubes de carbone.

10. Procédé selon l'une quelconque des revendications 1 à 9, **caractérisé en ce que** ledit matériau liquide formant une matrice qui contient des groupes vinyles est basé sur un composé organosilicié portant au moins un groupe vinyle et/ou est basé sur un composé d'acrylate.

11. Procédé selon l'une quelconque des revendications 1 à 10, **caractérisé en ce que** ledit matériau liquide formant la matrice qui contient des groupes vinyles est le vinyltriméthoxysilane, le méthacrylate de méthyle, le méthacrylate de glycidyle et/ou le diméthylacrylate d'éthylène glycol.

12. Procédé selon l'une quelconque des revendications 5 à 11, **caractérisé en ce que** le diamètre moyen desdites particules électro-conductrices à base de carbone ayant des dimensions comprises entre 1 nm et 99 nm est compris entre 5 nm et 50 nm.

13. Procédé selon l'une quelconque des revendications 1 à 12, **caractérisé en ce que** ledit plasma à pression atmosphérique est composé d'azote gazeux, d'oxygène gazeux, d'argon gazeux, d'un matériau formant une matrice qui contient un groupe vinyle, et/ou d'un composé organosilicié, de préférence de l'octaméthylcyclotétrasiloxane, du méthacrylate de méthyle et/ou du méthacrylate de glycidyle.

14. Procédé selon l'une quelconque des revendications 1 à 13, dans lequel ladite étape (c) est réalisée à une température comprise entre 5°C et 90°C, de préférence entre 15°C et 40°C.

15. Procédé selon l'une quelconque des revendications 1 à 14, **caractérisé en ce que** le substrat métallique est placé sur un plateau mobile transportant le substrat métallique à travers une zone de déposition de la suspension pour déposer la suspension sur au moins une partie du substrat métallique et une zone de plasma dans laquelle le plasma à pression atmosphérique est appliqué.
